# EUROPEAN PATENT SPECIFICATION

(11) **EP 2 689 128 B1**
(45) Date of publication and mention of the grant of the patent: **09.12.2015**
(21) Application number: 12712572.2
(22) Date of filing: 22.03.2012
(51) Int. Cl.: F03D 1/06, B29C 33/26, B29D 99/00, B29C 70/44

(54) **Molding apparatus for making a wind turbine blade and method of making same**
Formgerät zur Herstellung eines Windturbinenblattes und Herstellungsverfahren dafür
Appareil de moulage permettant de réaliser une pale d'éolienne et son procédé de réalisation

(30) Priority: 23.03.2011 US 201161466563 P; 25.03.2011 DK 201170143 P
(43) Date of publication of application: 29.01.2014
(73) Proprietor: Vestas Wind Systems A/S, 8200 Aarhus N (DK)
(72) Inventor: RAJASINGAM, Damien, Cowes PO31 7PL (GB)
(74) Representative: Vestas Patents Department
(86) International application number: PCT/DK2012/050086
(87) International publication number: WO 2012/126479

(56) References cited:
- EP-B1- 1 562 733
- EP-B1- 1 963 068
- DE-U1-202010 014 682

## Description

### Technical Field

This application relates generally to wind turbines, and more particularly to a molding apparatus for constructing a wind turbine blade and to a method of making a wind turbine blade using such a molding apparatus.

### Background

The typical modern wind turbine includes a tower that supports a nacelle at an upper end thereof. A rotor having a central hub and one or more blades is coupled to the nacelle and converts the kinetic energy of the wind into mechanical energy, usually in the form of a rotating main shaft. The nacelle includes various components, such as a drive train and a generator, that convert the mechanical energy from the rotor into electrical energy. Wind turbines are known to generate their highest yield (i.e., operating efficiency) under predetermined aerodynamic conditions of their blades, which may have a predetermined profile for optimizing lift on the blades. As the blades are a major aspect and cost of wind turbine construction, much effort has been directed toward the efficient manufacturing of the blades.

According to one conventional process, a wind turbine blade is manufactured by disposing structural outer shell material into two mold halves and then injecting a binder, such as an epoxy resin, polyester resin, or other suitable material around the structural outer shell material while a vacuum system (e.g., vacuum bag) presses the structural outer shell material into each of the mold halves. In an alternate process, pre-impregnated composite material may be used which precludes injecting the material with a binder. In any event, after curing the binder about the structural outer shell material (e.g., a fiberglass weave), the two halves of the wind turbine blade outer shell may be coupled to one another around a structural support member or spar. The two halves of the wind turbine blade are typically coupled by adhesive material along, for example, the leading and trailing edges thereby completing blade construction.

Bringing the two halves of the blade together can be a difficult and time-consuming task. One current method to facilitate the coupling of the blade halves includes utilizing the mold halves which were used to form the blade halves. In this regard, once the blade halves are formed in their respective molds, the mold halves may be moved relative to each other to locate one mold half on top of the other mold half such that the edges (e.g., the leading and trailing edges) of the two blade halves are generally aligned with each other. The mold halves may then be brought even closer together so that the edges of the blade halves may be, for example, adhesively bonded together.

By way of example, a conventional approach for moving the mold halves relative to each other has one mold half in a fixed position and the other mold half arranged so it rotates or pivots relative to the fixed mold half so as to be positioned on top of the fixed mold half (e.g., a clamshell configuration). This rotating or pivot action is typically achieved with a fixed hinge or pivot mechanism (e.g., the pivot point or axis remains stationary during use) operatively coupled to the movable mold half and optionally coupled to the fixed mold half. In this regard, the pivot mechanism may be located adjacent the interface between the two mold halves, i.e., adjacent an upper surface of the fixed mold half.

While the manufacturing method described above is generally successful for its intended purpose, manufacturers have more recently realized certain limitations to the conventional manufacturing method. More particularly, as the size of wind turbine blades has continued to increase, the size of the molds used to make the blades has correspondingly increased. As a result, finding sufficient space within the manufacturing facility suitable for housing the blade molds has become particularly problematic. In this regard, many existing manufacturing facilities enclose an interior floor space with a ceiling having a vertical height of about 11 meters or less. Current wind turbine blade construction has chord lengths approaching about 6 meters or more and is expected to grow moving forward. The size of the molds sufficient to accommodate blade halves of this size are very large such that there is a significant concern that as the movable mold half rotates about the fixed pivot axis, the moving mold half will contact the ceiling, light fixtures, duct work, etc. adjacent the ceiling, and thereby be prevented from further movement that properly locates the movable mold half on top of the fixed mold half. Such a scenario will then prevent the complete construction of the wind turbine blade in accordance with current methodologies.

Of course one solution to this problem is to raise the ceiling height of the manufacturing facility so as to provide sufficient space to fully rotate the movable mold half. While this solution may be implemented when building a new manufacturing facility, such a solution is generally not viable for existing facilities. In this regard, the costs for raising the ceiling height of the manufacturing facility would be prohibitively high. Such a renovation may also result in a temporary shut-down of the facility, a reduction in production output, and loss of work hours, thus adding further costs and inefficiencies to the renovation project.

A representative example of the prior art is disclosed in DE202010 01462 U1, which discloses the features specified in the preamble of claim 1 of the present invention.

Accordingly, there is a need for an improved molding apparatus and associated method that allows wind turbine blades of increasing size to be manufactured in existing manufacturing facilities without undue concern of contacting the ceiling or adjacent fixtures during movement of a mold half and without the need of expensive and time-consuming renovations.

### Summary

To address these and other drawbacks of conventional approaches, a method of making a wind turbine blade having a first shell half and a second shell half using a molding apparatus having a first mold half and a second mold half comprises at least partially forming the first shell half in the first mold half; at least partially forming the first shell half in the second mold half; moving the first and second mold halves relative to each other from an opened position, where respective molding surfaces of the first and second mold halves are exposed, to a closed position, where the molding surfaces of the first and second mold halves confront each other; and coupling the first shell half and the second shell half to form the wind turbine blade.

In an exemplary embodiment, the moving step further comprises rotating the first and second mold halves relative to each other about a pivot axis; translating the pivot axis in a first direction of translation during movement of the mold halves between the opened and closed positions; and translating the pivot axis in a second direction of translation different from the first direction during movement of the mold halves between the opened and closed directions.

In one embodiment, rotation of the first and second mold halves from the opened position to an intermediate position defines a first phase of rotation of the first and second mold halves, and rotation from the intermediate position to the closed position defines a second phase of rotation of the first and second mold halves, wherein the step of translating the pivot axis in the first direction occurs during the first phase and the step of translating the pivot axis in the second direction occurs during the second phase. In one particular embodiment, the first and second mold halves rotate through an angle θ of approximately 180° from the opened position to the closed position and the intermediate position is approximately midway through the full rotation of the mold halves.

According to the invention, one of the first or second mold halves is supported on a support surface and the pivot axis is located at a height relative to the support surface, wherein translating the pivot axis in the first direction comprises decreasing the height of the pivot axis relative to the support surface and translating the pivot axis in the second direction comprises increasing the height of the pivot axis relative to the support surface. In one exemplary embodiment, translating the pivot axis in the first direction comprises translating the pivot axis vertically downward, and translating the pivot axis in the second direction comprises translating the pivot axis vertically upward.

From a timing standpoint, in one embodiment, the rotating and translating steps occur simultaneously for at least a portion of the relative movement of the first and second mold halves. In an alternative embodiment, however, the rotating step occurs without translation and the translating step occurs without rotation. In one embodiment, the rotation of the first and second mold halves occurs around a single pivot axis.

In still a further embodiment, the molding apparatus may include a rotational prime mover and a translational prime mover, wherein rotation of the first and second mold halves relative to each other about the pivot axis is carried out by activating the rotation prime mover and translation of the pivot axis in the first and second directions is carried out by activating the translational prime mover. The molding apparatus may include a controller coupled to the rotational prime mover and the translational prime mover, wherein the rotating and translating steps are controlled by the controller and may be implemented in an automated manner, such as a timed sequence of as a function of rotational position.

In accordance with another aspect, a method of operating a molding apparatus within a manufacturing facility having a support surface to support the molding apparatus and an obstruction vertically spaced above the molding apparatus, the molding apparatus comprising a first mold half and a second mold half, the first mold half being immovably supported on the support surface and the second mold half being movable relative to the first mold half includes rotating the second mold half about a pivot axis; translating the pivot axis in a direction away from the obstruction as the second mold half moves toward the obstruction above the molding apparatus; continuing rotation of the second mold half about the pivot axis; and translating the pivot axis toward the obstruction after the second mold half has cleared the obstruction.

In another embodiment, a wind turbine includes a tower; a nacelle coupled to the tower; and a rotor coupled to the nacelle and including a hub and at least one blade extending therefrom. The at least one blade is made in accordance with the method as described above.

A molding apparatus for manufacturing a wind turbine blade having a first shelf half and a second shell half includes a first mold half for forming the first shell half of the wind turbine blade and a second mold half for forming the second shell half of the wind turbine blade. The molding apparatus further includes a turner assembly coupled to at least one of the first and second mold halves and configured to move the first and second mold halves relative to each other between an opened position and a closed position. In the opened position, the first and second shell halves are configured to be at least partially formed in the first and second mold halves. In the closed position, the first and second shell halves are configured to be coupled to each other to form the wind turbine blade. The turner assembly includes a pivot mechanism coupled to at least one of the first and second mold halves that defines a pivot axis. The pivot mechanism provides rotational movement of the first and second mold halves relative to each other about the pivot axis. The turner assembly also includes a track coupled to the pivot mechanism that defines a translation axis. The track provides translational movement of the pivot axis in a direction generally parallel to the translation axis. The track includes a first lug, a second lug spaced from the first lug, and a travel rod extending between the first and second lugs.

In an embodiment of the invention, the turner assembly includes a rotational prime mover for causing rotational movement of the first and second mold halves relative to each other about the pivot axis. Additionally, the turner assembly may include a translational prime mover for causing translational movement of the pivot axis in a direction generally parallel to the translation axis. A controller may be operatively coupled to the rotational and translational prime movers for controlling the rotational movement of the first and second mold halves relative to each other and controlling the translational movement of the pivot axis.

The translational prime mover may include an actuator coupled to the pivot mechanism and movable between an extended position and a contracted position. The actuator may be coupled to the pivot mechanism such that actuation of the actuator moves the pivot mechanism along the track and in a direction generally parallel to the translation axis. The track may be coupled to the other of the first and second mold halves and the turner assembly may include only a single pivot axis. Furthermore, in a specific embodiment, the pivot mechanism is coupled to one of the first and second mold halves and to the track. The coupling between the pivot mechanism and the one mold half provides for rotational movement of the one mold half relative to the other mold half about the pivot axis. The coupling between the pivot mechanism and the track provides for translational movement of the pivot axis in a direction generally parallel to the translation axis.

In another embodiment, a wind turbine includes a tower, a nacelle coupled to the tower, and a rotor coupled to the nacelle and including a hub and at least one blade extending therefrom. The at least one blade may be made with the molding apparatus in accordance with that described above.

### Brief Description of the Drawings

The accompanying drawings, which are incorporated in and constitute a part of this specification, illustrate various embodiments of the invention and, together with a general description of the invention given above and the detailed description of the embodiments given below, serve to explain the embodiments of the invention.
Fig. 1 is a diagrammatic perspective view of a wind turbine having a blade made with a molding apparatus in accordance with one embodiment of the invention;
Fig. 2 is a perspective view of a wind turbine blade shown in Fig. 1;
Fig. 3 is a cross-sectional view of the wind turbine blade shown in Fig. 2 taken along line 3-3;
Fig. 4 is a cross-sectional view of a molding apparatus in accordance with one embodiment of the invention and in an opened position;
Fig. 4A is an enlarged portion of Fig. 4 illustrating a turner assembly in accordance with an embodiment of the invention;
Fig. 5 is a schematic cross-sectional view illustrating an exemplary method of forming a wind turbine blade shell in a mold;
Fig. 6 is another cross-sectional view of the molding apparatus shown in Fig. 4 with one of the mold halves moved toward a closed position;
Fig. 7 is another cross-sectional view of the molding apparatus shown in Fig. 4 with one of the mold halves shown in an upright position;
Fig. 8 is another cross-sectional view of the molding apparatus shown in Fig. 4 with one of the mold halves shown in a peak position;
Fig. 9 is another cross-sectional view of the molding apparatus shown in Fig. 4 with one of the mold halves moved even further toward the closed position;
Fig. 10 is another cross-sectional view of the molding apparatus shown in Fig. 4 when in the closed position; and
Fig. 11 is a partial perspective view of the molding apparatus shown in Fig. 4.

### Detailed Description

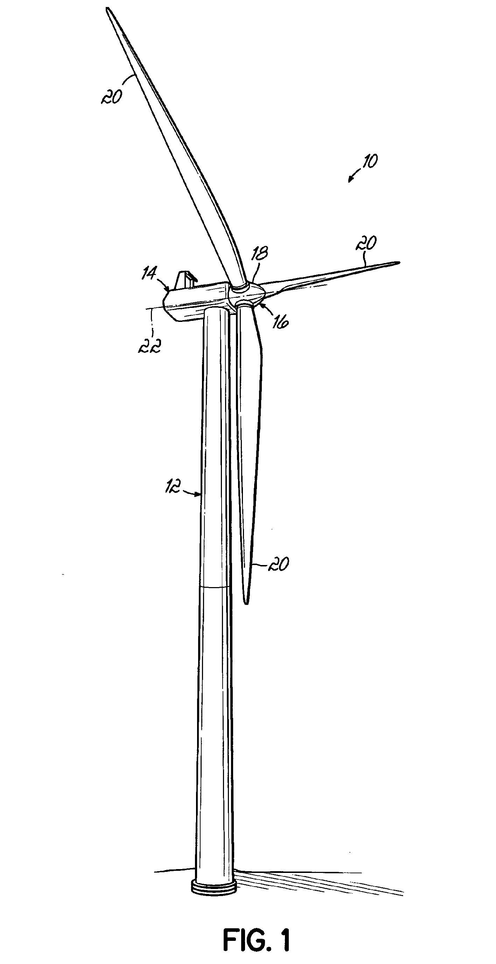

With reference to Fig. 1 and in accordance with an embodiment of the invention, a wind turbine 10 includes a tower 12, a nacelle 14 disposed at the apex of the tower 12, and a rotor 16 operatively coupled to a generator (not shown) housed inside the nacelle 14. In addition to the generator, the nacelle 14 houses miscellaneous components required for converting wind energy into electrical energy and various components needed to operate, control, and optimize the performance of the wind turbine 10. The tower 12 supports the load presented by the nacelle 14, the rotor 16, and other components of the wind turbine 10 that are housed inside the nacelle 14, and also operates to elevate the nacelle 14 and rotor 16 to a height above ground level or sea level, as may be the case, at which faster moving air currents of lower turbulence are typically found.

The rotor 16 of the wind turbine 10, which is represented as a horizontal-axis wind turbine, serves as the prime mover for the electromechanical system. Wind exceeding a minimum level will activate the rotor 16 and cause rotation in a direction substantially perpendicular to the wind direction. The rotor 16 of wind turbine 10 includes a central hub 18 and at least one blade 20 that projects outwardly from the central hub 18. In the representative embodiment, the rotor 16 includes three blades 20 at locations circumferentially distributed thereabout, but the number may vary. The blades 20 are configured to interact with the passing air flow to produce lift that causes the central hub 18 to spin about a longitudinal axis 22. The rotor 16 is mounted on an end of a main rotary shaft (not shown) that extends into the nacelle 14 and is rotatably supported therein by a main bearing assembly (not shown) coupled to the framework of the nacelle 14. The main rotary shaft is coupled to a drive train (not shown) having as an input the relatively low angular velocity main rotary shaft, and having as an output a higher angular velocity secondary rotary shaft (not shown) that is operatively coupled to the generator.

The wind turbine 10 may be included among a collection of similar wind turbines belonging to a wind farm or wind park that serves as a power generating plant connected by transmission lines with a power grid, such as a three-phase alternating current (AC) power grid. The power grid generally consists of a network of power stations, transmission circuits, and substations coupled by a network of transmission lines that transmit the power to loads in the form of end users and other customers of electrical utilities. Under normal circumstances, the electrical power is supplied from the generator to the power grid as known to a person having ordinary skill in the art.

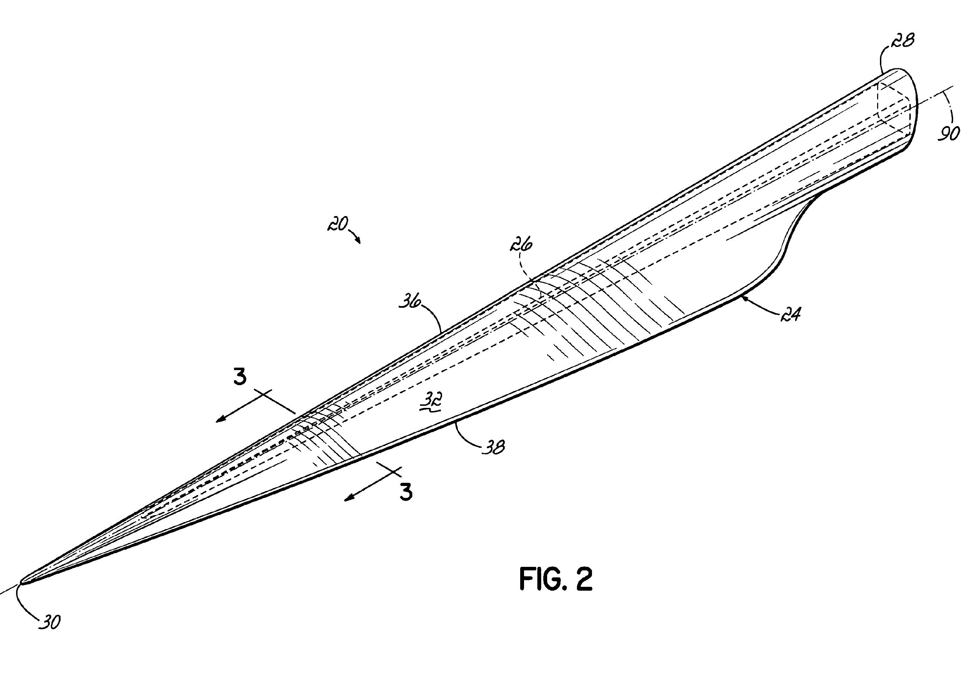

With reference to Figs. 1-3, a wind turbine blade 20 is an elongate structure having, in an exemplary embodiment, an outer shell 24 disposed about an inner support element or spar 26. The outer shell 24 may be optimally shaped to give the blade 20 the desired aerodynamic properties to generate lift, while the spar 26 provides the structural aspects (e.g., strength, stiffness, etc.) to blade 20. The elongate blade 20 includes a first root end 28 which is coupled to the central hub 18 when mounted to rotor 16, and a tip end 30 longitudinally opposite to root end 28. As discussed above, the outer shell 24 includes a first, upper shell half 32 on the suction side of the blade 20, and a second, lower shell half 34 on the pressure side of the blade 20, the upper and lower shell halves 32, 34 being coupled together along a leading edge 36 and a trailing edge 38 located opposite one another across a width of the blade 20.

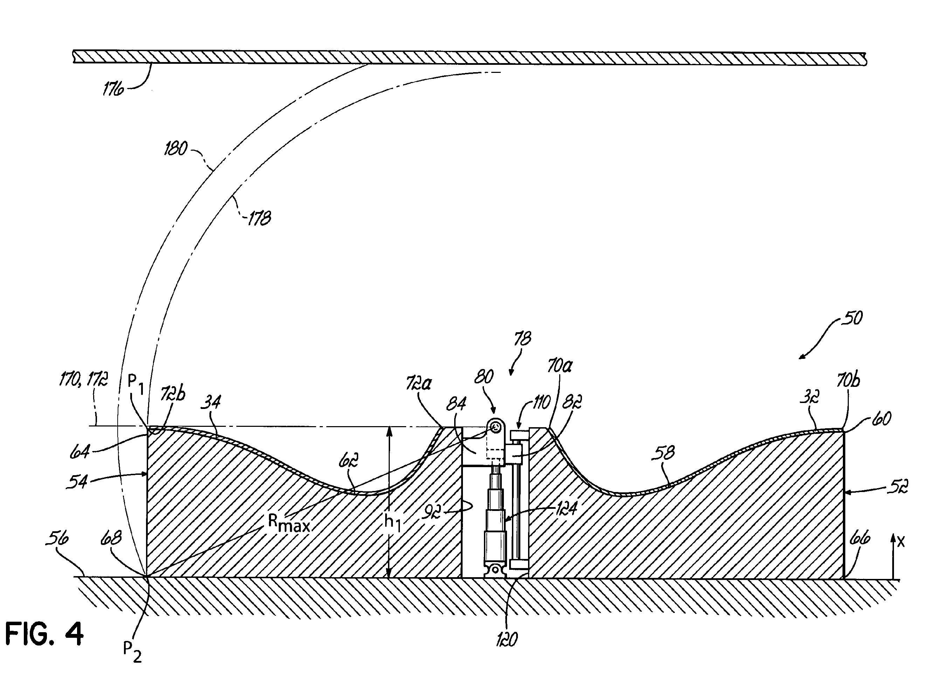

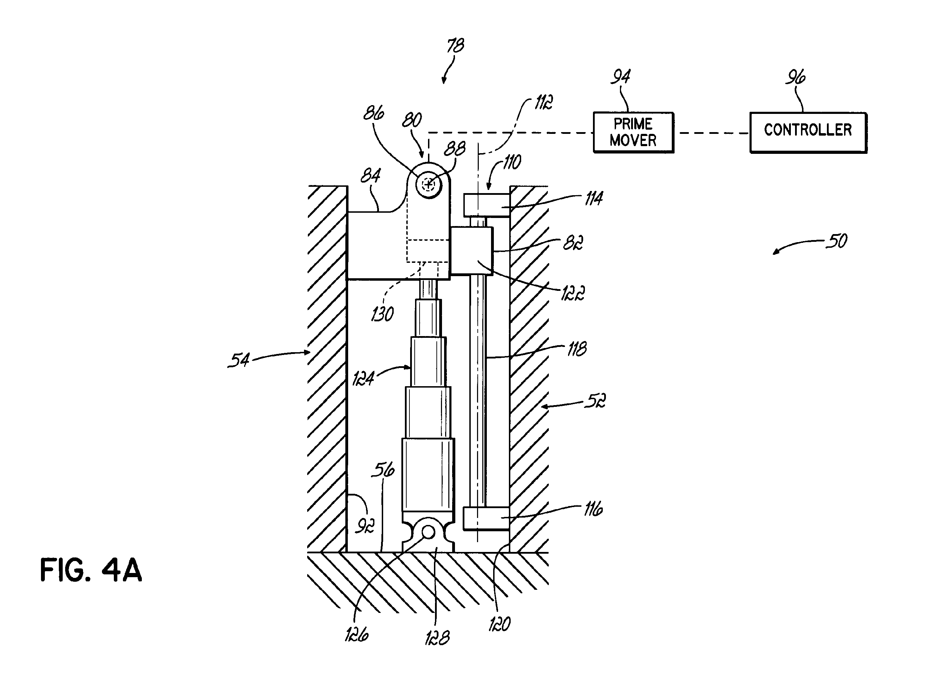

In accordance with an exemplary embodiment of the invention and as illustrated in Fig. 4, a molding apparatus 50 may be used to form the blades 20 of wind turbine 10. The molding apparatus 50 includes a first mold half 52 and a second mold half 54 positioned relative to each other and positioned relative to a support surface 56, such as the ground, floor, platform, etc. of a manufacturing facility. As will be explained in more detail below, the first mold half 52 is configured to be used to at least partially form the first shell half 32 and the second mold half 54 is configured to be used to at least partially form the second shell half 34. To this end, the first mold half 52 includes a contoured surface 58 at a first end 60 (e.g., an upper end) thereof generally corresponding to a negative of the contoured surface of the first shell half 32. Similarly, the second mold half 54 includes a contoured surface 62 at a first end 64 (e.g., an upper end from the perspective of Fig. 4) thereof generally corresponding to a negative of the contoured surface of the second shell half 34. The first and second mold halves 52, 54 may be formed from fiberglass reinforced with a metal frame (e.g., steel frame), as is generally understood in the art.

In accordance with an aspect of the invention, and as mentioned above, at least one of the mold halves 52, 54 is movable relative to the other such that mold halves 52, 54 may be used to couple the first and second blade shell halves 32, 34 together and thereby complete the construction of the blade 20. In an exemplary embodiment, the molding apparatus 50 may have a clamshell configuration having one fixed mold half and a second movable mold half movable relative to the fixed mold half so as to be positionable generally over the top of the fixed mold half. In this regard, the first mold half 52 may be configured to be fixed relative to the support surface 56, and the second mold half 54 may be configured to be movable relative to the first mold half 52 (and relative to support surface 56). For example, a second end 66 of the first mold half 52 may be supported by, such as by directly resting on, support surface 56. Moreover, the first mold half 52 may be secured to the support surface 56, such as by suitable fasteners and the like. It should be recognized, however, that the first mold half 52 may be fixedly supported on support surface 56 in other ways. It should also be recognized that in an alternative embodiment, the first mold half 52 may be movable and the second mold half 54 may be stationary.

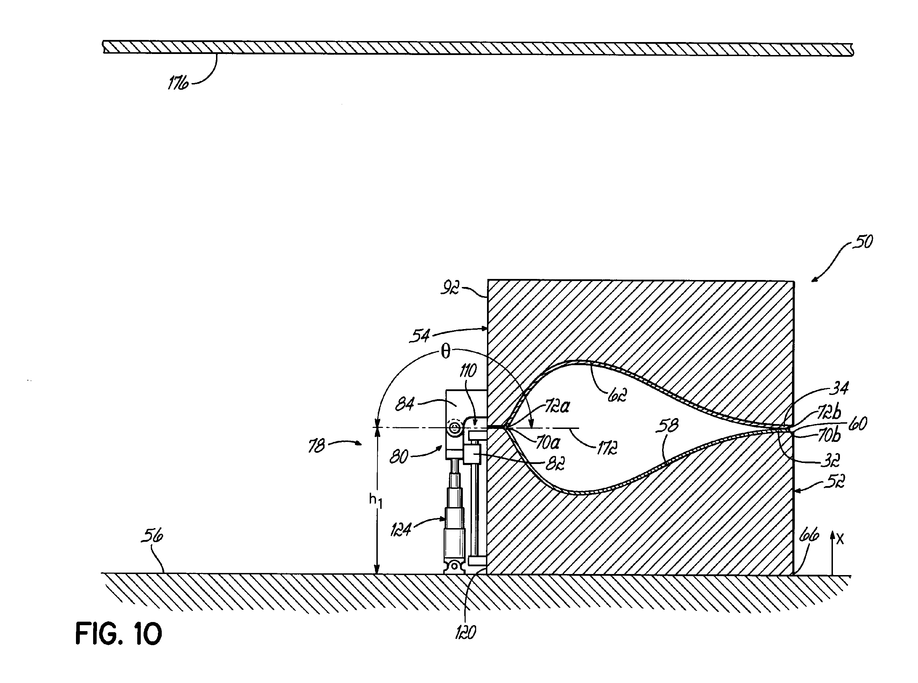

With such a clamshell configuration, the second mold half 54 may be movable relative to the first mold half 52 between an opened position, illustrated in Fig. 4, for example, and a closed position, illustrated in Fig. 10, for example. In the opened position, the contoured surfaces 58, 62 of the first and second mold halves 52, 54, respectively, are exposed such that the blade shell halves 32, 34 may be at least partially formed therein in accordance with a method to be described below. For example, in the opened position, the second mold half 54 may be positioned similarly to the first mold half 52, such as with a second end 68 of the second mold half 54 being supported by, such as by directly resting on, support surface 56. The invention, however, is not so limited as the second mold half 54 may be unsupported or supported on another object when in the opened position. In the closed position, the second mold half 54 may be positioned over the top of the first mold half 52 such that the respective pairs of confronting edges 70a, 70b, 72a, 72b of the first and second shell halves 32, 34 may be generally aligned and in contact or near contact with each other so as to be coupled together (Fig. 10).

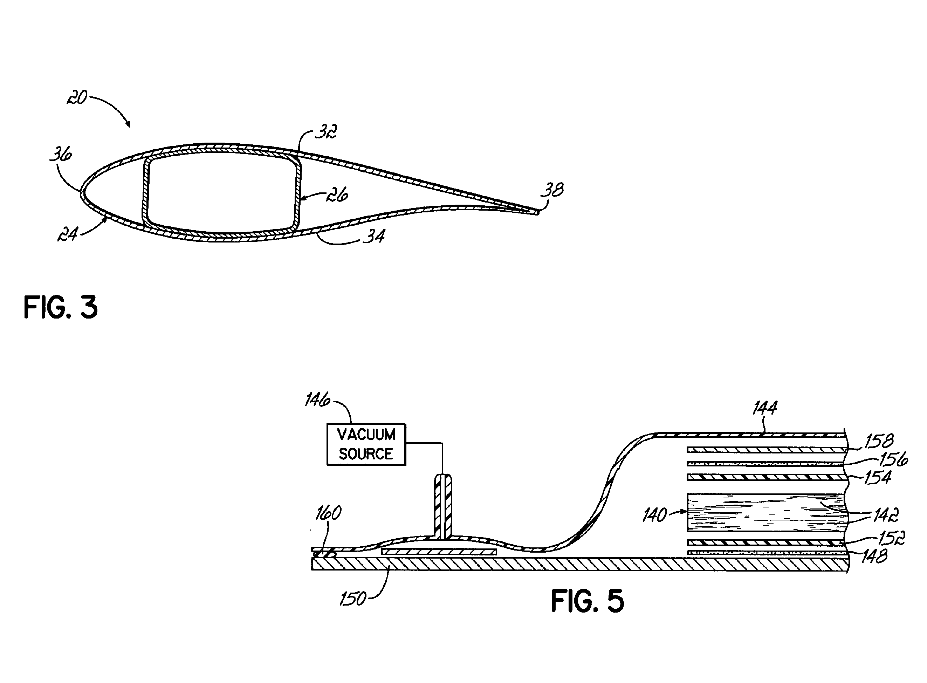

To effectuate movement of the second mold half 54 relative to the first mold half 52, the molding apparatus 50 may include a turner assembly 78, which may be positioned between the first and second mold halves 52, 54 when in the opened position, for example. In one embodiment, the turner assembly 78 includes a hinge or pivot mechanism, generally shown at 80, having a first pivot portion 82, a second pivot portion 84 and a pivot pin 86 operatively coupled to the first and second pivot portions 82, 84 and which defines a pivot axis 88. At least one of the first and second pivot portions 82, 84 is rotatable relative to the other about pivot axis 88. As illustrated in the figures, the pivot mechanism 80 may be arranged such that the pivot axis 88 extends in a direction generally parallel to the longitudinal axis 90 of the blade 20 (Fig. 3). Additionally, in an exemplary embodiment the second pivot portion 84 may be rigidly coupled to the second mold half 54, such as along a side wall 92 thereof. Accordingly, the second mold half 54 is permitted to rotate about pivot axis 88 defined by pivot mechanism 80.

Those of ordinary skill in the art will recognize various mechanisms for rotating the second mold half 54 about the pivot axis 88. For example, the molding apparatus 50 may include one or more controllable prime movers, shown schematically at 94, operatively coupled to the turner assembly 78 (or alternatively the second mold half 54) for rotating the second mold half 54 about pivot axis 88. The prime mover 94 may include, without limitation, a wide variety of motors and/or actuators arranged in such a manner as to allow controlled rotation of the second mold half 54 about pivot axis 88. Additionally, the prime mover 94 may be operatively coupled to a controller, shown schematically at 96, for controlling the prime mover 94 and thus the rotation of the second mold half 54 about pivot axis 88.

As can be appreciated by one of ordinary skill in the art, the controller 96 may include one or more processors that manipulate signals (analog and/or digital) based on operational instructions that are stored in a memory. The controller 96 may further include an Input/Output (I/O) interface employing a suitable communication protocol for communicating with prime mover 94 and a data port to allow communication between the controller and/or a network or other device, such as a computer and/or data storage device. The controller 96 may include a human machine interface (HMI) operatively coupled to the processor and include output devices, such as alphanumeric and/or graphical displays, a touch screen, and other visual indicators, and input devices and controls, such as an alphanumeric keyboard, a pointing device, keypads, pushbuttons, control knobs, etc., capable of accepting commands or input from the operator and transmitting the entered input to the processor. The processor may operate under the control of an operating system, and executes or otherwise relies upon computer program code or logic embodied in various computer software applications to read data from and transmit instructions or signals to the various components operatively coupled to the controller 96.

In accordance with one aspect of the invention, the pivot mechanism 80 is not relegated to being in a fixed position relative to the support surface 56, or to other fixed components of the molding apparatus 50, such as the first mold half 52. Instead, the turner assembly 78 may be configured such that the pivot mechanism 80 may be movable relative to, for example, the support surface 56 or the first mold half 52. As will be discussed in more detail below, the ability to move the pivot mechanism 80, and more particularly the ability to move pivot axis 88, provides certain benefits that address some of the drawbacks of current molding devices discussed above.

To effectuate the movement of the pivot mechanism 80, the turner assembly 78 may include a track 110 that operates as a guide or otherwise at least partially controls the movement of the pivot mechanism 80. The track 110 may be coupled to a fixed object, such as the support surface 56 or the first mold half 52, as is illustrated in Figs. 4 and 4A. In one embodiment, the track 110 may be configured to permit movement of the pivot mechanism 80 along a generally linear translation path having a translation axis 112 and defining two generally opposed directions of movement along that axis. More particularly, in one embodiment, the translation axis 112 may be generally perpendicular to the longitudinal axis 90 of the blade 20. For example, the translation axis 112 may be generally vertically oriented such that the pivot mechanism 80 is movable along track 110 in a generally upwardly and downwardly direction and relative to, for example, support surface 56.

In the exemplary embodiment, the track 110 may include a pair of spaced apart supports or lugs 114, 116 and a travel rod 118 extending therebetween and having an axis that is at least parallel to (and perhaps coaxial with) the translation axis 112. The lugs 114, 116 may be coupled to the first mold half 52, such as on a side wall 120 thereof. As shown in Fig. 4, the side walls 120, 92 of the first and second mold halves 52, 54, respectively, may be configured to confront each other when the molding apparatus 50 is in the opened position with the turner assembly 78 disposed therebetween. Lug 114 may be positioned adjacent the first end 60 of the first mold half 52, and the lug 116 may be positioned adjacent the second end 66 of the first mold half 52 so that rod 118 defines a sufficiently long travel path to achieve the purposes as more fully described below.

In accordance with this aspect of the invention, the pivot mechanism 80 may be movably coupled to the track 110. In this regard, the first pivot portion 82 may include a bushing or collar 122 which is mounted about the travel rod 118 such that movement of the first pivot portion 82, and thus the pivot mechanism 80, is limited to movement along the rod 118 and along translation axis 112. The collar 122 may include additional features that facilitate the movement of the collar 122 along the rod 118. For example, the collar 122 may include various bearings, seals, lubricants (e.g., grease, oils etc.), or other devices that facilitate such movement. The rod 118 may also include lubricants to reduce the friction and ease movement of the collar 122 along the rod 118. In any event, it should be understood that the collar/rod arrangement limits movement of the pivot mechanism 80 along a linear path defined by travel rod 118 and directed along translation axis 112.

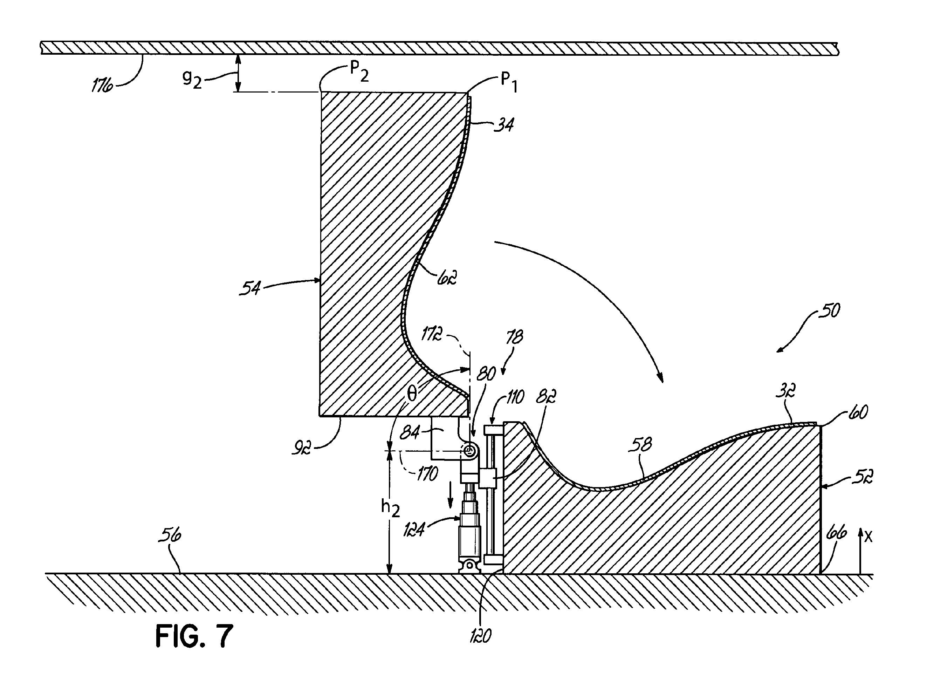

To move the pivot mechanism 80 along the travel rod 118, the turner assembly 78 may include a second prime mover operatively coupled to, for example, the pivot mechanism 80. As illustrated in Figs. 4 and 4A, in one embodiment, the prime mover may include an actuator, generally shown at 124, which is operatively coupled to the pivot mechanism 80 for moving the pivot mechanism 80 along travel rod 118. In this regard, the actuator 124 may include a first end 126 that remains fixed. For example, the first end 126 may be coupled to the support surface 56 or to the first mold half 52. This coupling may also be achieved by a swivel connector 128 so as to allow greater degrees of freedom in its movements during use. The actuator 124 may further include a second end 130 coupled to the pivot mechanism 80, such as at first pivot portion 82 and via a suitable connector as known to those of ordinary skill in the art. The actuator 124 is configured to move between an extended position (Fig. 4A) and a contracted position (Fig. 7). In the extended position, the first and second ends 126, 130 are separated by a first distance, and in the contracted position, the first and second ends 126, 130 are separated by a second distance less than the first distance.

As shown in Figs. 4 and 4A, when the actuator 124 is in the extended position, the collar 122 is adjacent lug 114 of track 110. In this position, the pivot mechanism 80, and more particularly the pivot axis 88 thereof, may be at its highest position (e.g., vertical position) relative to support surface 56. In contrast to this, and as shown in Fig. 7, when the actuator 124 is in the contracted position, the collar 122 is adjacent the lug 116 of track 110. In this position, the pivot mechanism 80, and more particularly the pivot axis 88 thereof, may be at its lowest position (e.g., vertical position) relative to support surface 56. To control the actuator 124, and thus the position of the pivot mechanism 80 along track 110, actuator 124 may be operatively coupled to a suitable controller, such as controller 96 as schematically shown in Fig. 4A. It should be realized, however, that the actuator 124 may be coupled to its own controller, separate from the controller that controls the rotation of the second mold half 54 about pivot axis 88.

In one embodiment, the actuator 124 may be configured as a hydraulic actuator. However, this is merely exemplary as other actuators, such as mechanical linear actuators (e.g., screw jack, ball screw, roller screw actuators, etc.), pneumatic actuators, electro-mechanical actuators, or other actuators known to those of ordinary skill in the art, may be used to facilitate movement of the pivot mechanism 80 along the travel rod 118. Accordingly, aspects of the invention should not be limited to any particular type of actuator.

With the molding apparatus 50, including the turner assembly 78, described from a structural and functional standpoint, use of the molding apparatus 50 to manufacture a wind turbine blade 20 will now be described. For purposes of description, use of the molding apparatus 50 will be described from an initial position of when the mold halves 52, 54 are in the opened position, as shown in Fig. 4. A coordinate system may be defined to aid in the description of the movement of the second mold half 54. In this regard, an x-coordinate axis may be defined which locates the pivot axis 88 relative to a reference point or plane, such as, for example, the support surface 56. A θ-coordinate direction may also be defined which provides an indication of the rotation of the second mold half 54 about the pivot axis 88.

In this regard, a first reference plane 170 may be defined which is fixed in space and a second reference plane 172 may be defined which moves with rotation of the second mold half 54. The angle between these two planes may be defined to be the θ coordinate. In one embodiment, the first reference plane 170 may be parallel to the support surface 56 (e.g., generally horizontal) and the second reference plane 172 may be generally aligned with a surface of the second mold half 54. The two reference planes 170, 172 may be coplanar when in the opened position such that θ has an initial value of approximately zero. It should be recognized, however, that other coordinate systems may be used to describe the movement of the second mold half 54 toward the closed position, and the invention is not limited to that used herein.

In this initial position, the actuator 124 may be in or near its fully extended position such that the pivot axis 88 may be located a distance x = h₁ from the support surface 56. It is contemplated that the distance h₁ may be as much as 3 to 5 meters and is expected to increase as wind turbine designs further evolve. As noted above, in the opened position, the contoured surfaces 58, 62 of mold halves 52, 54 are exposed such that the first and second shell halves 32, 34 may be at least partially formed using the mold halves 52, 54. In this regard, Fig. 5 is a schematic illustration of an exemplary process used to form the first and second shell halves 32, 34 using the molding apparatus 50.

As illustrated in this figure, the blade 20 is defined by a composite laminate 140 made up of a fiber material such as glass fiber, carbon fiber, or other material or combination of materials known to those of ordinary skill in the art of manufacturing wind turbine blades. In a specific embodiment, the method includes the use of a plurality of layers 142 of a resin-impregnated fiber fabric. Alternatively, the method may include using layers 142 that are dry (i.e., resin-free), with resin being injected into the forming process and directed toward the layers 142. A vacuum bag 144 may be applied over the composite laminate 140 and a vacuum source 146 is actuated to evacuate excess air and resin from the layers 142. A heat source (not shown) may then be used to cure the resin resulting in formation of the composite laminate 140.

The method may include placing a release agent 148 such as a liquid release coating, a wax, or a solid barrier (e.g., Teflon® tape) over a tool, schematically shown at 150. In the instant application, the tool 150 would include the contoured surfaces 58, 62 of the first and second mold halves 52, 54. An optional layer (not shown) of release material (e.g., film) may then be applied over the release agent 148. In addition, a first optional layer of peel ply 152 may be applied over the release material layer, if present, or directly over the release agent 148. Next, several layers 142 of the fiber fabric may be placed over one another (e.g., stacked) to define an assembly of layers 142 and resin, until a desired, predetermined thickness is reached. Once the desired thickness of the assembly is reached, a second optional peel ply 154 made, for example, of nylon or some other tightly woven fabric impregnated with a release agent, may be applied over the formed assembly.

Once the second optional peel ply 154 is in place, a layer 156 of release film may be applied thereover. In the embodiment of Fig. 5, a breather or bleeder material layer 158 may then be applied over the second optional peel ply 154, which is configured to absorb excess resin and let gases escape during formation of the composite laminate 140. The breather or bleeder material layer 158 also provides a continuous air path for pulling of the vacuum and prevents direct contact between the resin and the vacuum bag 144. With continued reference to Fig. 5, the vacuum bag 144 may be placed over the above-mentioned layers and secured in place against the tool 150 via a securing element 160, such as a bag sealant tape, and the vacuum source 146 actuated. Actuation of the vacuum source 146 is effective to pull the bag 144 toward the tool 150, i.e., pull the assembly of layers 142 toward the contoured surfaces 58, 62 of mold halves 52, 54 so as to give shape to the first and second shell halves 32, 34. The vacuum source 146 is also effective to remove air as well as excess resin from the assembly of layers 142 and resin. In a subsequent step, the resulting assembly is allowed to cure or at least partially cure within the mold halves 52, 54.

In an alternative embodiment of the method described above, when the layers 142 are not pre-impregnated with resin, but are instead dry layers of fiber, a resin distribution system (not shown) may be placed in communication with the layers 142 under the vacuum bag 144 and used to distribute resin to the layers 142. It should be recognized that the method of forming the first and second shell halves 32, 34 using the mold halves 52, 54 as described above is merely exemplary. Those of ordinary skill in the art will recognize a host of other or related methodologies which may be used to form the shell halves 32, 34 in the mold halves 52, 54. These alternative methodologies remain within the scope of the present invention. No matter what particular method is used to form the first and second shell halves 32, 34, at the end of this step, the at least partially formed (e.g., at least partially cured) shell halves 32, 34 may be positioned in their respective mold halves 52, 54, with the mold halves 52, 54 in their opened position, as shown in Fig. 4.

The next step in accordance with the method includes moving the second mold half 54 so as to be positioned over top of the first mold half 52, i.e., move the second mold half 54 toward the closed position. As eluded to above, in an advantageous aspect of the invention, this movement has two separate components, each component being separately controllable (i.e., each component being independently controlled). The first component is the rotation of the second mold half 54 about the pivot axis 88 (indicated by the θ coordinate). As noted above, this movement may be achieved by prime mover 94 under, for example, the control of controller 96. The second component is the movement of the pivot mechanism 80, including the pivot axis 88, along the translation axis 112 defined by the travel rod 118 of track 110 (indicated by the x coordinate). As noted above, this movement may be achieved by actuator 124 under, for example, the control of controller 96.

From a broad perspective, the pivoting movement of the second mold half has two portions or phases. The first phase has the second mold half moving toward the ceiling of the manufacturing facility such that a gap distance therebetween is decreasing. The second phase has the second mold half moving away from the ceiling of the manufacturing facility such that a gap distance therebetween is increasing. In accordance with an aspect of the invention, during the first phase of the rotation, the pivot axis may be shifted downwardly to provide additional space for rotation of the mold half and thereby avoid contact with the ceiling of the facility. During the second phase of the rotation, however, the pivot axis may be shifted back upwardly so that the second mold half may properly mate with the first mold half in the closed position. Figs. 4 and 6-10 illustrate a progression of the second mold half 54 as it is moved from the opened position to the closed position, as will now be described.

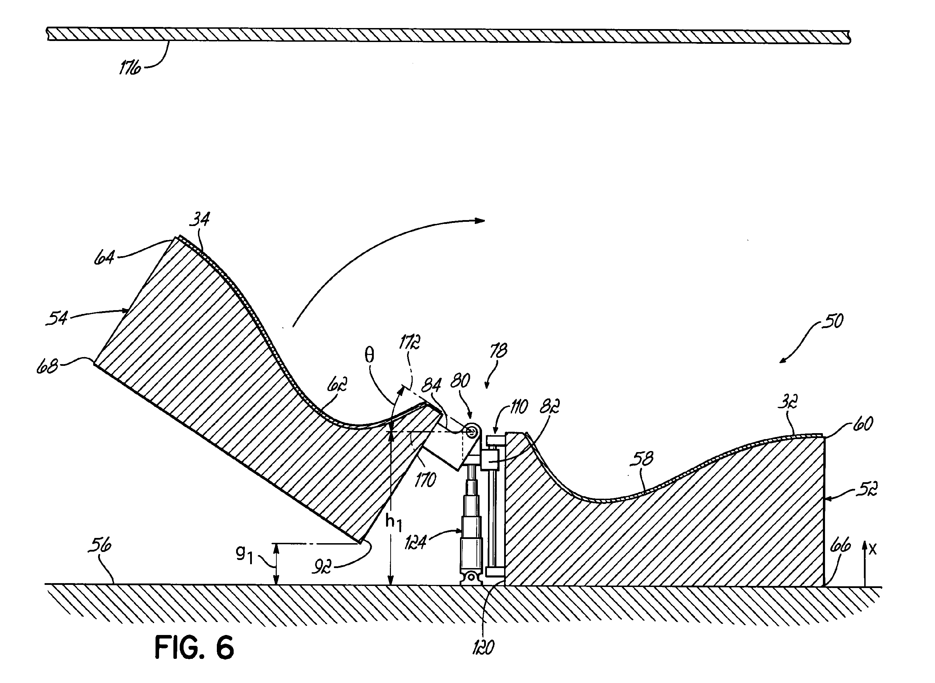

As the actuator 124 is in or near its fully extended position when in the opened position, the initial movement of the second mold half 54 may be solely rotational through, for example, actuation of prime mover 94. Of course, depending on what supports the second mold half 54 when in the opened position and/or the design of track 110, it may be possible to move the second mold half 54 along translation axis 112, such as upwardly away from support surface 56, prior to or simultaneous with the initial rotation of the second mold half 54 about pivot axis 88. In any event, as illustrated in Fig. 6, as the second mold half 54 is rotated, a clearance or gap g₁, taken in a direction generally parallel to the translation axis 112, forms between the second mold half 54 and the support surface 56. This gap distance g₁ represents the distance the pivot axis 88 could be translated along the travel rod 118 in a generally downwardly direction before the second mold half 54 would contact the support surface 56. The primary point, however, is that rotation of the second mold half 54 creates sufficient space for the downward movement of the pivot axis 88.

With this in mind, as the second mold half 54 continues to rotate toward the closed position, the pivot mechanism 80, and thus the pivot axis 88, may be moved along the travel rod 118 in a direction along the translation axis 112 and in, for example, a generally downwardly direction toward the support surface 56. As noted above, this may be achieved by controlling actuator 124, and more particularly, moving actuator 124 away from its extended position and toward is contracted position. In an exemplary embodiment, the movement of the pivot mechanism 80 along travel rod 118 occurs simultaneously with the rotation of the second mold half 54 about the pivot axis 88, i.e., both the first and second components of the movement occur together for at least for a portion of the movement of the second mold half 54. In an alternative embodiment, however, the components of the movement may be separated such that only a single component is occurring at any one time. By way of example, in this methodology, the second mold half 54 would: i) rotate without any translational movement; ii) stop rotating; iii) translate without rotational movement; iv) stop translating, and continue in a similar sequence so as to achieve the desired result in accordance with the invention.

No matter whether the translational movement and the rotational movement occur simultaneously or in separate, discrete steps in accordance with aspects of the invention, in one embodiment, the actuator 124 should be moving toward its contracted position prior to the second mold half 54 reaching its upright position (e.g., θ ≅ 90°). This position is illustrated in Fig. 7 wherein the pivot axis 88 is now located at a height x = h₂ above the support surface 56, which is less than h₁. More particularly, in accordance with an aspect of the invention, the downward translational movement of the pivot mechanism 80 is coordinated with the rotational movement of the second mold half 54 such that the second mold half 54 does not contact the ceiling 176 of the manufacturing facility or other fixtures, such as lights, duct work, etc. (not shown), adjacent the ceiling 176. Those of ordinary skill in the art will recognize how to coordinate these movements so as to achieve this particular objective. These coordinated movements may be done manually, such as through controller 96. Alternatively, the coordinated movements may be programmed into controller 96 and executed in an automated manner.

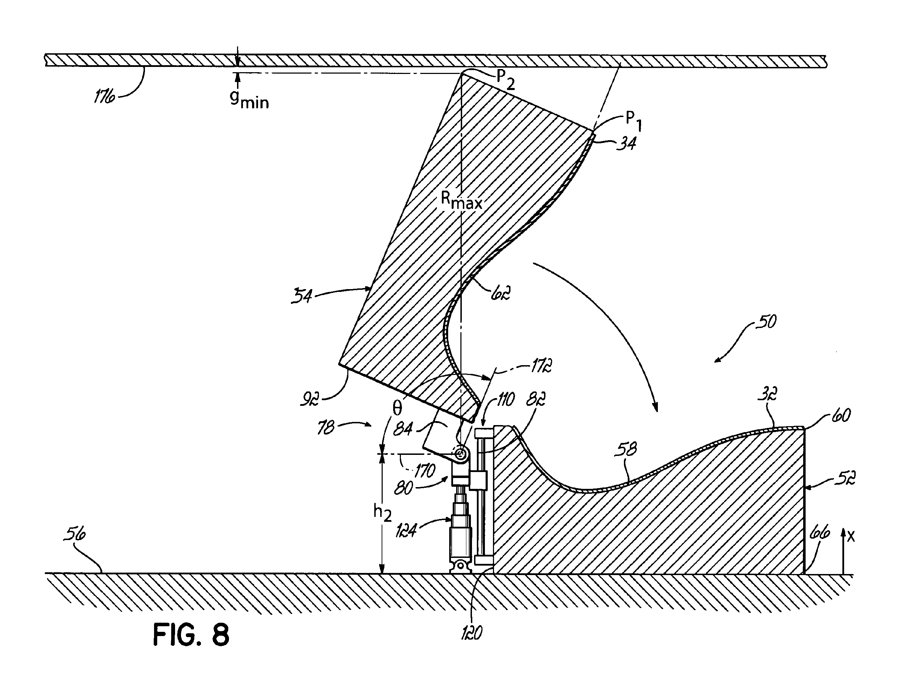

In any event, when the second mold half 54 is in the upright position, the second mold half 54 may be separated from the ceiling 176 (or fixtures) by a gap g₂. Referring back to Fig. 4, curves 178 and 180 show the path of travel of points P₁ and P₂, respectively, in the event the pivot axis 88 remains fixed (relative to that shown in Fig. 4) with the actuator 124 in the extended position. By comparing these curves to the positions shown in Figs. 7 and 8 (discussed below), it is clear that but for the pivot axis 88 moving downwardly, the second mold half 54 would contact the ceiling 176 as it rotates toward the closed position. However, because the pivot axis 88 is able to move downwardly, by moving the actuator 124 toward the contracted position, the second mold half 54 does not contact the ceiling 176 and the points P₁ and P₂ are located safely below the ceiling 176. It is contemplated that the amount of travel of the pivot mechanism 80 along travel rod 118 as the actuator 124 moves between its extended and contracted positions may be between about 1 meter and about 2 meters. However, this amount may vary depending on the specific application.

Depending on the particular configuration of the second mold half 54, as the second mold half 54 continues to be rotated toward the closed position, the gap between the second mold half 54 and the ceiling 176 may reach a minimum, as illustrated in Fig. 8. This minimum gap gₘᵢₙ exists when that portion of the second mold half 54 furthest from the pivot axis 88, identified by the distance Rₘₐₓ in Fig. 4 (and in the instant case that portion or point being coterminous with the point P₂), is vertically aligned with the pivot axis 88. This peak position may represent the maximum vertical height of the second mold half 54 during its movement to the closed position. Certainly in this position, the actuator 124 should be in a fully contracted configuration to provide the best opportunity for the second mold half 54 to clear the ceiling 176. The position of the second mold half 54 from that shown in Fig. 4 to that shown in Fig. 8 represents the first phase of the rotation where the distance between the second mold half 54 and the ceiling 176 decreases. As described, the pivot axis 88 may be moved downwardly during this phase.

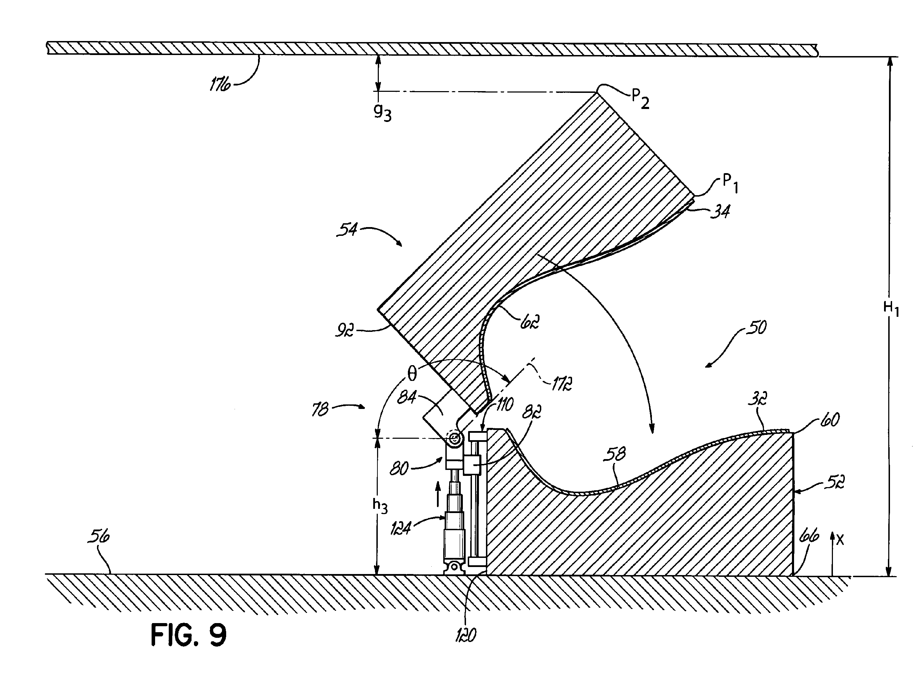

Fig. 9 illustrates the second mold half 54 after it has passed the upright position and the peak positions shown in Figs. 7 and 8, respectively. In this regard, as the second mold half 54 moves further toward the closed position, the gap g₃ between the second mold half 54 and the ceiling 176 starts to increase (i.e., the second mold half 54 moves away from the ceiling 176). However, in order to allow the second mold half 54 to properly mate up with the first mold half 52, the pivot axis 88 may have to be moved upwardly and back towards its original position, i.e., moved so that the pivot axis 88 is generally aligned with the interface between the first and second mold halves 52, 54 when in the closed position, as shown in Fig. 10. For example, as illustrated in Fig. 9, the pivot axis 88 may have a height x = h₃ relative to the support surface 56 which may be greater than h₂ but less than h₁. As one can imagine, if the pivot axis 88 were not moved upwardly toward its original position, the second mold half 54 might contact the first mold half 52 prematurely and certainly not in a configuration wherein the second mold half 54 is positioned over top of the first mold half 52 such that the edges 70a, 70b, 72a, 72b of first and second shell halves 32, 34 are in contact or near contact with each other so as to be coupled together.

Similar to the above, the pivot mechanism 80, and thus the pivot axis 88, may be moved along the travel rod 118 in a direction along the translation axis 112 and in, for example, a generally upwardly direction away from the support surface 56. As noted above, this may be achieved by controlling actuator 124, and more particularly, moving actuator 124 from its contracted position toward its extended position. In an exemplary embodiment, the upward movement of the pivot mechanism 80 along travel rod 118 may occur simultaneously with the rotation of the second mold half 54 about the pivot axis 88, i.e., both the first and second components of the movement occur together for at least a portion of the movement of the second mold half 54. In an alternative embodiment, however, the components of the movement may be separated such that only a single component is occurring at any one time. In accordance with an aspect of the invention, the upward movement of the pivot mechanism 80 may be coordinated with the rotational movement of the second mold half 54 such that the second mold half 54 does not prematurely contact the first mold half 52. Those of ordinary skill in the art will recognize how to coordinate these movements so as to achieve this particular objective. These coordinated movements may be done manually, such as through controller 96. Alternatively, the coordinated movements may be programmed into controller 96 and executed in an automated manner.

Fig. 10 illustrates the mold halves 52, 54 when in the closed position (θ ≅ 180°). In this position, the pivot axis 88 has been moved back to approximately its original position (e.g., a height x = h₁ relative to support surface 56) by moving the actuator 124 back to its extended or to its nearly extended position. In the closed position, the second mold half 54 is positioned overtop the first mold half 52 such that the edges 70a, 70b, 72a, 72b are in contact or near contact with each other. Accordingly, these edges, which may represent the leading and trailing edges 36, 38 of the blade 20, may be bonded together to complete the construction of the blade 20. Although the spar 26 is not shown in the molding sequence shown in Figs. 4 and 6-10, those of ordinary skill in the art will recognize how to incorporate such a spar 26 into the blade construction using molding apparatus 50. The position of the second mold half 54 from that shown in Fig. 8 to that shown in Fig. 10 represents the second phase of the rotation where the distance between the second mold half 54 and the ceiling 176 increases. As described, the pivot axis 88 may be moved upwardly during this phase.

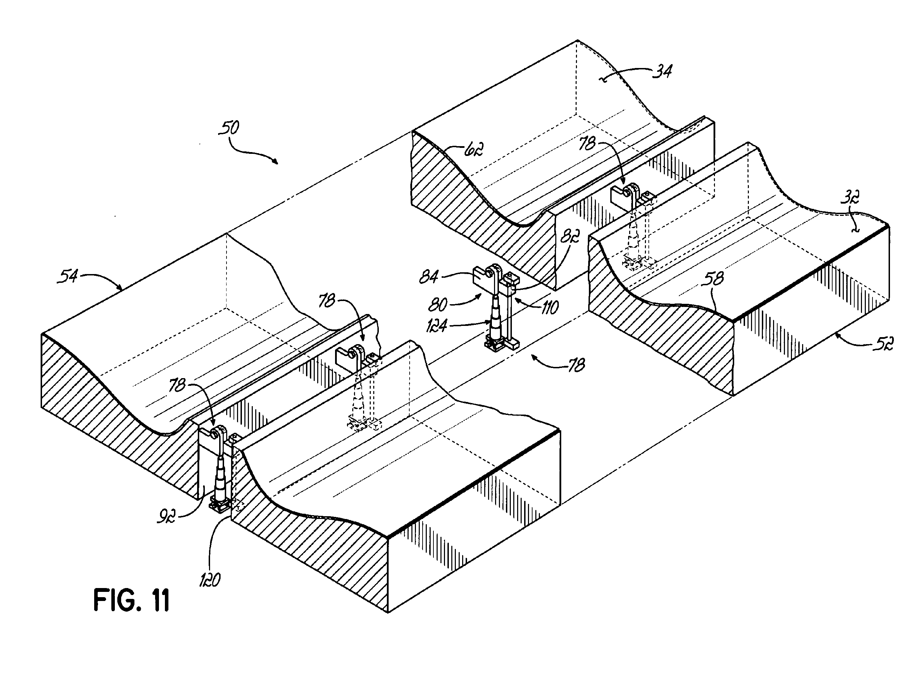

Fig. 11 illustrates a portion of the molding apparatus 50 from a perspective view. As will be appreciated, the molding apparatus 50 may be relatively long in the longitudinal direction (i.e., the direction of axis 90 of blade 20). Accordingly, the molding apparatus 50 may include one or more turner assemblies 78 for rotating the second mold half 54 relative to the first mold half 52 between the opened and closed positions. As noted above, each of the turner assemblies 78 may include a pivot mechanism 80, a track 110 for guiding the movement of the pivot mechanism 80, and an actuator 124 for moving the pivot mechanism 80 along the track 110. Those of ordinary skill in the art will recognize the number and location of the turner assemblies 78 along, for example, side walls 92, 120 to provide for proper operation of the molding apparatus 50. It should be recognized that the turner assemblies 78 may be operatively coupled to a single controller, such as controller 96, so as to synchronize the operation of all of the turner assemblies 78 and effectuate controlled movement of the second mold half 54 from the opened position to the closed position.

In summary, blade sizes are growing to such an extent that the molding apparatus used to manufacture the blades may not fit within the existing manufacturing facilities. In this regard, existing manufacturing methods call for rotatable mold halves having a fixed pivot axis. To accommodate the growing size of wind turbine blades, molds have also increased in size, to the point where there is some concern that the rotating mold will contact the ceiling during its movement to the closed position. Aspects of the present invention as fully disclosed herein address this and other problems of conventional systems. More particularly, the molding apparatus disclosed herein includes a pivot axis that is translatable along a translation axis. In this way, as the mold half is rotated, the pivot axis may be moved so as to provide sufficient space for the mold to rotate without contacting the ceiling of the manufacturing facility. This will, in turn, allow the existing manufacturing techniques (e.g., rotating mold halves) to continue being used in existing manufacturing facilities with minimal, cost-effective modifications to the molding apparatus.

While the invention has been illustrated by a description of various embodiments, and while these embodiments have been described in considerable detail, it is not the intention of the applicant to restrict or in any way limit the scope of the appended claims to such detail. Additional advantages and modifications will readily appear to those skilled in the art. For example, in the method described above, the first and second shell halves were nearly completely formed in the first and second shell halves (e.g., but for being fully cured) prior to rotation of the mold halves to the closed position. The invention is not so limited however. In this regard, rotation of the mold halves toward the closed position can occur at other times of the formation process. By way of example, the layers of fabric (and optionally other components) may be place in the mold halves when in the opened position, but the application of vacuum pressure and/or curing may be performed after the mold haves have been moved to the closed position. Thus, the particular order of the steps may be varied and should not be limited to any particular order used to describe the exemplary embodiments.

## Claims

1. A method of making a wind turbine blade (20) having a first shell half (32) and a second shell half (34) using a molding apparatus (50) having a first mold half (52) and a second mold half (54), the method comprising:
at least partially forming the first shell half (32) in the first mold half (52),
at least partially forming the second shell half (34) in the second mold half (54),
moving the first and second mold halves (52, 54) relative to each other from an opened position, where respective molding surfaces of the first and second mold halves are exposed, to a closed position, where the molding surfaces of the first and second mold halves confront each other, the moving step further comprising:
rotating the first and second mold halves (52, 54) relative to each other about a pivot axis (88),
translating the pivot axis (88) in a first direction of translation during movement of the mold halves between the opened and closed positions; and
translating the pivot axis (88)in a second direction of translation different from the first direction during movement of the mold halves between the opened and closed positions; and
coupling the first shell half (32) and the second shell/half (34) to form the wind turbine blade (20), **characterized in that** at least one of the first or second mold halves (52, 54) is supported on a support surface (56) and the pivot axis (88) is located at a height relative to the support surface (56), wherein translating the pivot axis (88) in the first direction comprises decreasing the height of the pivot axis (88) relative to the support surface (56) and translating the pivot axis (88) in the second direction comprises increasing the height of the pivot axis (88) relative to the support surface (56).

2. The method according to claim 1, wherein the rotation of the first and second mold halves (52, 54) from the opened position to an intermediate position defines a first phase of rotation of the first and second mold halves, and rotation of the first and second mold halves (52, 54) from the intermediate position to the closed position defines a second phase of rotation, the step of translating the pivot axis (88) in the first direction occurring during the first phase and the step of translating the pivot axis (88) in the second direction occurring during the second phase.

3. The method according to claim 2, wherein the first and second mold halves (52, 54) rotate through an angle θ of approximately 180° from the opened position to the closed position and the intermediate position is approximately midway through the full rotation of the mold halves.

4. The method according to any of claims 1-3, wherein translating the pivot axis (88) in the first direction comprises translating the pivot axis (88) vertically downward and translating the pivot axis (88) in the second direction comprises translating the pivot axis (88) vertically upward.

5. The method according to any of claims 1-4, wherein the rotating and translating steps occur simultaneously for at least a portion of the relative movement of the first and second mold halves (52, 54).

6. The method according to any of claims 1-4, wherein the rotating step occurs without translation and the translating steps occur without rotation.

7. The method according to any of claims 1-6, wherein rotation of the first and second mold halves (52, 54) occurs around a single pivot axis.

8. The method according to any of claims 1-7, wherein the molding apparatus (50) includes a rotational prime mover (94) and a translational prime mover. wherein the step of rotating the first and second mold halves (52, 54) relative to each other about the pivot axis (88) further comprises activating the rotational prime mover, and the step of translating the pivot axis (88) in the first and second directions comprises activating the translational prime mover.

9. The method according to claim 8, wherein the molding apparatus (50) further includes a controller (96) coupled to the rotational prime mover (94) and the translational prime mover, wherein the steps of rotating the first and second mold halves (52, 54) and translating the pivot axis (88) in the first and second directions is controlled by the controller (96) and is implemented in an automated sequence.

10. A molding apparatus (50) for manufacturing a wind turbine blade (20) having a first shell half (32) and a second shell half (34) comprising:
a first mold half (52) for forming the first shell half (32) of the wind turbine blade;
a second mold half (54) for forming the second shell half (34) of the wind turbine blade; and
a turner assembly (78) coupled to at least one of the first and second mold halves (52, 54) and configured to move the first and second mold halves relative to each other between an opened position and a closed position, the first and second shell halves (32, 34) configured to be at least partially formed in the first and second mold halves (52, 54) when in the opened position, and the first and second shell halves (32, 34) configured to be coupled to each other to form the wind turbine blade (20) when in the closed position,
wherein the turner assembly (78) includes a pivot mechanism (80) coupled to at least one of the first and second mold halves (52, 54) and defining a pivot axis (88) the pivot mechanism (80) providing rotational movement of the first and second mold halves (52, 54) relative to each other about the pivot axis (88), and
wherein the turner assembly (78) further includes a track (110) coupled to the pivot mechanism (80) and defining a translation axis (112), the track (110) providing translational movement of the pivot axis (88) in a direction generally parallel to the translation axis (112)
wherein the track (110) further comprises a first lug (114), a second lug (116) spaced from the first lug (114), and a travel rod (118) extending between the first and second lugs (114, 116).

11. The molding apparatus according to claim 10, wherein the turner assembly (78) further comprises a rotational prime mover (94) for causing rotational movement of the first and second mold halves (52, 54) relative to each other and a translational prime mover for causing translational movement of the pivot axis (88).

12. The molding apparatus according to claim 11, further comprising a controller (96) operatively coupled to the rotational prime mover (94) and the translational prime mover, the controller (96) controlling the rotational movement of the first and second mold halves (52, 54) relative to each other and the translational movement of the pivot axis (88).

13. The molding apparatus according to claim 11 or 12, wherein the translational prime mover includes an actuator (124) coupled to the pivot mechanism (80) and movable between an extended position and a contracted position, wherein actuation of the actuator (124) moves the pivot mechanism (80) along the track (110) and in a direction generally parallel to the translation axis (112).

14. The molding apparatus according to any of claims 10-13, wherein the turner assembly (78) defines only a single pivot axis (88).

15. The molding apparatus according to any of claims 10-14, wherein the track (110) is coupled to the other of the first and second mold halves (52, 54).

## Patentansprüche

1. Verfahren zum Herstellen eines Windturbinenblattes (20), das eine erste Außenhauthälfte (32) und eine zweite Außenhauthälfte (34) aufweist, unter Verwendung einer Formvorrichtung (50), die eine erste Formhälfte (52) und eine zweite Formhälfte (54) aufweist, wobei das Verfahren umfasst:
mindestens teilweise Bilden der ersten Außenhauthälfte (32) in der ersten Formhälfte (52),
mindestens teilweise Bilden der zweiten Außenhauthälfte (34) in der zweiten Formhälfte (54),
Bewegen der ersten und der zweiten Formhälfte (52, 54) relativ zueinander von einer geöffneten Position aus, in der die jeweiligen Formoberflächen der ersten und der zweiten Formhälfte freiliegend sind, hin zu einer geschlossenen Position, in der die Formoberflächen der ersten und der zweiten Formhälften einander gegenüberstehen, wobei der Bewegungsschritt ferner umfasst:
Drehen der ersten und der zweiten Formhälfte (52, 54) relativ zueinander um eine Drehachse (88);
Verschieben der Drehachse (88) in eine erste Richtung der Verschiebung während einer Bewegung der Formhälften zwischen der geöffneten und der geschlossenen Position; und
Verschieben der Drehachse (88) in eine zweite Richtung, die ein andere als die erste Richtung während der Bewegung der Formhälften zwischen der geöffneten und der geschlossenen Position ist; und
Verbinden der ersten Außenhauthälfte (32) und der zweiten Außenhauthälfte (34), um das Windturbinenblatt (20) zu bilden, **dadurch gekennzeichnet, dass** die erste und/oder die zweite Formhälfte (52, 54) auf einer Auflageoberfläche (56) getragen wird und dass die Drehachse (88) in einer Höhe relativ zu der Auflageoberfläche (56) angeordnet ist, wobei ein Verschieben der Drehachse (88) in die erste Richtung ein Abnehmen der Höhe der Drehachse (88) relativ zu der Auflageoberfläche (56) umfasst, und wobei ein Verschieben der Drehachse (88) in die zweite Richtung ein Zunehmen der Höhe der Drehachse (88) relativ zu der Auflageoberfläche (56) umfasst.

2. Verfahren nach Anspruch 1, wobei die Drehung der ersten und der zweiten Formhälfte (52, 54) aus der geöffneten Position zu einer Zwischenposition eine erste Phase der Drehung der ersten und der zweiten Formhälfte definiert, und wobei eine Drehung der ersten und der zweiten Formhälfte (52, 54) von der 2wischenposition zu der geschlossenen Position eine zweite Phase der Drehung definiert, wobei der Schritt des Verschiebens der Drehachse (88) in die erste Richtung während der erste Phase auftritt und wobei der Schritt des Verschiebens der Drehachse (88) in die zweite Richtung während der zweite Phase auftritt.

3. Verfahren nach Anspruch 2, wobei sich die erste und die zweite Formhälfte (52, 54) um einen Winkel von etwa 180° von der geöffneten zu der geschlossenen Position dreht und wobei sich die Zwischenposition etwa in der Hälfte des Weges durch die volle Drehung der Formhälften befindet.

4. Verfahren nach einem der Ansprüche 1 bis 3, wobei ein Verschieben der Drehachse (88) in die erste Richtung ein Verschieben der Drehachse (88) vertikal nach unten umfasst und wobei ein Verschieben der Drehachse (88) in die zweite Richtung ein Verschieben der Drehachse (88) vertikal nach oben und

5. Verfahren nach einem der Ansprüche 1 bis 4, wobei die Schritte des Drehens und des Verschiebens für einen Abschnitt der relativen Bewegung der ersten und der zweiten Formhälfte (52, 54) gleichzeitig auftreten.

6. Verfahren nach einem der Ansprüche 1 bis 4, wobei der Schritt des Drehens ohne ein Verschieben stattfindet und die Verschiebungsschritte ohne eine Drehung stattfinden.

7. Verfahren nach einem der Ansprüche 1 bis 6, wobei die Drehung der ersten und der zweiten Formhälfte (52, 54) um eine einzelne Drehachse stattfindet.

8. Verfahren nach einem der Ansprüche 1 bis 7, wobei die Formvorrichtung (50) eine Drehantriebsmaschine (94) und eine Antriebsmaschine für die Translationsbewegung enthält, wobei der Schritt des Drehens der ersten und der zweiten Formhälfte (52, 54) relativ zueinander um die Drehachse (88) ferner ein Aktivieren der Drehantriebsmaschine umfasst, und der Schritt des Verschiebens der Drehachse (88) in die erste und in die zweite Richtung ein Aktivieren der Antriebsmaschine für die Translationsbewegung umfasst.

9. Verfahren nach Anspruch 8, wobei die Formvorrichtung (50) ferner eine Steuereinheit (96) enthält, die mit der Drehantriebsmaschine (94) und mit der Antriebsmaschine für die Translationsbewegung verbunden ist, wobei die Schritte des Drehens der ersten und der zweiten Formhälfte (52, 54) und des Verschiebens der Drehachse (88) in die erste und in die zweite Richtung von der Steuereinheit (96) gesteuert wird und in einer automatisierten Folge implementiert wird.

10. Formvorrichtung (50) zum Herstellen eines Windturbinenblatts (20), das eine erste Außenhauthälfte (32) und eine zweite Außenhauthälfte (34) aufweist, wobei die Formvorrichtung umfasst:
eine erste Formhälfte (52) zum Bilden der ersten Außenhauthälfte (32) des Windturbinenblatts;
eine zweite Formhälfte (54) zum Bilden der zweiten Außenhauthälfte (34) des Windturbinenblatts; und
eine Dreh- und Wendeanordnung (78), die mit der ersten und/oder der zweiten Formhälfte (52, 54) verbunden ist und dafür konfiguriert ist, die erste und die zweite Formhälfte relativ zueinander zwischen einer geöffneten Position und einer geschlossenen Position zu bewegen, wobei die erste und die zweite Außenhauthälfte (32, 34) konfiguriert sind, um mindestens teilweise in der ersten und zweiten Formhälfte (52, 54) gebildet zu werden, wenn sie in der der geöffneten Position sind, und wobei die erste und die zweite Außenhauthälfte (32, 34) konfiguriert sind, um miteinander verbunden zu werden, um das Windturbinenblatt (20) zu bilden, wenn sie in der geschlossenen Position sind,
wobei die Dreh- und Wendeanordnung (78) einen Drehmechanismus (80) enthält, der mit der ersten und/oder der zweiten Formhälfte (52, 54) verbunden ist und eine Drehachse (88) definiert, wobei der Drehmechanismus (80) eine Drehbewegung der ersten und der zweiten Formhälfte (52, 54) relativ zueinander um die Drehachse (88) bereitstellt, und
wobei die Dreh- und Wendeanordnung (78) ferner eine Spur (110) enthält, die mit dem Drehmechanismus (80) verbunden ist und eine Verschiebungsachse (112) definiert, wobei die Spur (110) eine Verschiebungsbewegung der Drehachse (88) in einer Richtung bereitstellt, die im Allgemeinen parallel zu der Verschiebungsachse (112) ist,
wobei die Spur (110) ferner einen ersten Bügel (114), einen zweiten Bügel (116), der beabstandet von dem ersten Bügel (114) angeordnet ist, und einen Fahrstab (118) umfasst, der sich zwischen dem ersten und dem zweiten Bügel (114, 116) erstreckt.

11. Formvorrichtung nach Anspruch 10, wobei die Dreh- und Wendeanordnung (78) ferner eine Drehantriebsmaschine (94) umfasst, die eine Drehbewegung der ersten und der zweiten Formhälfte (52, 54) relativ zueinander veranlasst, und die eine Antriebsmaschine für die Translationsbewegung umfasst, die eine Translationsbewegung der Drehachse (88) veranlasst.

12. Formvorrichtung nach Anspruch 11, die ferner eine Steuereinheit (96) umfasst, die mit der Drehantriebsmaschine (94) und mit der Antriebsmaschine für die Translationsbewegung operativ verbunden ist, wobei die Steuereinheit (96) die Drehbewegung der ersten und der zweiten Formhälfte (52, 54) relativ zueinander und die Translationsbewegung der Drehachse (88) steuert.

13. Formvorrichtung nach Anspruch 11 oder 12, wobei die Antriebsmaschine für die Translationsbewegung eine Betätigungsvorrichtung (124) enthält, die mit dem Drehmechanismus (80) verbunden ist und die zwischen einer ausgezogenen Position und einer eingezogenen Position beweglich ist, wobei die Betätigung der Betätigungsvorrichtung (124) den Drehmechanismus (80) entlang der Spur (110) und in einer Richtung, die im Allgemeinen parallel zu der Verschiebungsachse (112) ist, bewegt.

14. Formvorrichtung nach einem der Ansprüche 10 bis 13, wobei die Dreh- und Wendeanordnung (78) nur eine einzige Drehachse (88) definiert.

15. Formvorrichtung nach einem der Ansprüche 10 bis 14, wobei die Spur (110) mit den anderen der ersten und der zweiten Formhälften (52, 54) verbunden ist.

## Revendications

1. Procédé de fabrication d'une pale d'éolienne (20) qui possède une première demi-coque (32) et une seconde demi-coque (34) à l'aide d'un appareil de moulage (50) qui possède une première moitié de moule (52) et une seconde moitié de moule (54), le procédé comprenant :
au moins la formation partielle de la première demi-coque (32) dans la première moitié de moule (52),
au moins la formation partielle de la seconde demi-coque (34) dans la seconde moitié de moule (54),
le déplacement de la première et de la seconde moitiés de moules (52, 54) l'une par rapport à l'autre d'une position ouverte, dans laquelle les surfaces de moulage respectives de la première et de la seconde moitiés de moules sont exposées, à une position fermée, dans laquelle les surfaces de moulage de la première et de la seconde moitiés de moules se confrontent, l'étape de déplacement comprenant en outre :
la rotation de la première et de la seconde moitiés de moules (52, 54) l'une par rapport à l'autre autour d'un axe de pivotement (88) ;
la translation de l'axe de pivotement (88) dans une première direction de translation pendant le déplacement des moitiés de moules entre les positions ouverte et fermée ; et
la translation de l'axe de pivotement (88) dans une seconde direction de translation différente de la première direction pendant le déplacement des moitiés de moules entre les positions ouverte et fermée ; et
le raccordement de la première demi-coque (32) et de la seconde demi-coque (34) afin de former la pale d'éolienne (20), **caractérisé en ce qu'**au moins l'une de la première ou de la seconde moitié de moule (52, 54) est supportée sur une surface de support (56), et l'axe de pivotement (88) se trouve à une hauteur par rapport à la surface de support (56), la translation de l'axe de pivotement (88) dans la première direction comprenant la diminution de la hauteur de l'axe de pivotement (88) par rapport à la surface de support (56), et la translation de l'axe de pivotement (88) dans la seconde direction comprenant l'augmentation de la hauteur de l'axe de pivotement (88) par rapport à la surface de support (56).

2. Procédé selon la revendication 1, dans lequel la rotation de la première et de la seconde moitiés de moules (52, 54) entre la position ouverte et une position intermédiaire définit une première phase de rotation de la première et de la seconde moitiés de moules, et la rotation de la première et de la seconde moitiés de moules (52, 54) entre la position intermédiaire et la position fermée définit une seconde phase de rotation, l'étape de translation de l'axe de pivotement (88) dans la première direction se produisant pendant la première phase, et l'étape de translation de l'axe de pivotement (88) dans la seconde direction se produisant pendant la seconde phase.

3. Procédé selon la revendication 2, dans lequel la première et la seconde moitiés de moules (52, 54) tournent à un angle θ d'environ 180° entre la position ouverte et la position fermée, et la position intermédiaire se trouve approximativement à mi-chemin grâce à la rotation complète des moitiés de moules.

4. Procédé selon l'une quelconque des revendications 1 à 3, dans lequel la translation de l'axe de pivotement (88) dans la première direction comprend la translation de l'axe de pivotement (88) à la verticale vers le bas, et la translation de l'axe de pivotement (88) dans la seconde direction comprend la translation de l'axe de pivotement (88) à la verticale vers le haut.

5. Procédé selon l'une quelconque des revendications 1 à 4, dans lequel les étapes de rotation et de translation se produisent simultanément pour au moins une partie du mouvement relatif de la première et de la seconde moitiés de moules (52, 54).

6. Procédé selon l'une quelconque des revendications 1 à 4, dans lequel l'étape de rotation se produit sans translation, et l'étape de translation se produit sans rotation.

7. Procédé selon l'une quelconque des revendications 1 à 6, dans lequel la rotation de la première et de la seconde moitiés de moules (52, 54) se produit autour d'un seul axe de pivotement.

8. Procédé selon l'une quelconque des revendications 1 à 7, dans lequel l'appareil de moulage (50) comprend une force motrice de rotation (94) et une force motrice de translation, dans lequel l'étape de rotation de la première et de la seconde moitiés de moules (52, 54) l'une par rapport à l'autre autour de l'axe de pivotement (88) comprend en outre l'activation de la force motrice de rotation, et l'étape de translation de l'axe de pivotement (88) dans la première et la seconde directions comprend l'activation de la force motrice de translation.

9. Procédé selon la revendication 8, dans lequel l'appareil de moulage (50) comprend en outre un contrôleur (96) relié à la force motrice de rotation (94) et à la force motrice de translation, dans lequel les étapes de rotation de la première et de la seconde moitiés de moules (52, 54) et de translation de l'axe de pivotement (88) dans la première et la seconde directions sont contrôlées par le contrôleur (96) et mises en oeuvre dans le cadre d'une séquence automatisée.

10. Appareil de moulage (50) destiné à fabriquer une pale d'éolienne (20) qui possède une première demi-coque (32) et une seconde demi-coque (34), qui comprend :
une première moitié de moule (52) destinée à former la première demi-coque (32) de la pale d'éolienne ;
une seconde moitié de moule (54) destinée à former la seconde demi-coque (34) de la pale d'éolienne ; et
un ensemble de rotation (78) relié à au moins l'une de la première et de la seconde moitiés de moules (52, 54) et configuré pour déplacer la première et la seconde moitiés de moules l'une par rapport à l'autre entre une position ouverte et une position fermée, la première et la seconde demi-coques (32, 34) étant configurées pour être au moins partiellement formées dans la première et la seconde moitiés de moules (52, 54) lorsqu'elles se trouvent en position ouverte, et la première et la seconde demi-coques (32, 34) étant configurées pour être reliées l'une à l'autre afin de former la pale d'éolienne (20) lorsqu'elles se trouvent en position fermée,
dans lequel l'ensemble de rotation (78) comprend un mécanisme de pivotement (80) relié à au moins l'une de la première et de la seconde moitiés de moules (52, 54) et qui définit un axe de pivotement (88), le mécanisme de pivotement (80) assurant le mouvement de rotation de la première et de la seconde moitiés de moules (52, 54) l'une par rapport à l'autre autour de l'axe de pivotement (88), et
dans lequel l'ensemble de rotation (78) comprend en outre un trajet (110) relié au mécanisme de pivotement (80) et qui définit un axe de translation (112), le trajet (110) assurant le mouvement de translation de l'axe de pivotement (88) dans une direction généralement parallèle à l'axe de translation (112),
dans lequel le trajet (110) comprend en outre un premier ergot (114) et un second ergot (116) espacé du premier ergot (114), et une tige de déplacement (118) qui s'étend entre le premier et le second ergots (114, 116).

11. Appareil de moulage selon la revendication 10, dans lequel l'ensemble de rotation (78) comprend en outre une force motrice de rotation (94) destinée à provoquer le mouvement de rotation de la première et de la seconde moitiés de moules (52, 54) l'une par rapport à l'autre, et une force motrice de translation destinée à provoquer le mouvement de translation de l'axe de pivotement (88).

12. Appareil de moulage selon la revendication 11, qui comprend en outre un contrôleur (96) relié à la force motrice de rotation (94) et à la force motrice de translation, le contrôleur (96) contrôlant le mouvement de rotation de la première et de la seconde moitiés de moules (52, 54) l'une par rapport à l'autre, et le mouvement de translation de l'axe de pivotement (88).

13. Appareil de moulage selon la revendication 11 ou 12, dans lequel la force motrice de translation comprend un actionneur (124) relié au mécanisme de pivotement (80) et mobile entre une position étendue et une position rétractée, dans lequel l'actionnement de l'actionneur (124) déplace le mécanisme de pivotement (80) le long du trajet (110) et dans une direction généralement parallèle à l'axe de translation (112).

14. Appareil de moulage selon l'une quelconque des revendications 10 à 13, dans lequel l'ensemble de rotation (78) définit un seul axe de pivotement (88).

15. Appareil de moulage selon l'une quelconque des revendications 10 à 14, dans lequel le trajet (110) est relié à l'autre de la première et de la seconde moitiés de moules (52, 54).
